# DEMANDE DE BREVET EUROPEEN

(11) **EP 1 053 899 A1**
(43) Date de publication de la demande: **22.11.2000**
(21) Numéro de dépôt: 00401349.6
(22) Date de dépôt: 17.05.2000
(51) Int. Cl.: B60J 5/12, B60J 5/10

(54) **Hayon arrière pour véhicule automobile**

(30) Priorité: 17.05.1999 FR 9906202; 17.05.1999 FR 9906203; 17.05.1999 FR 9906204
(71) Demandeur: Peugeot Citroen Automobiles SA, 92200 Neuilly sur Seine (FR)
(72) Inventeur: Bolle-Redat, Jean Christophe, 92250 La Garenne Colombes (FR); Charon, Olivier, 92250 La Garenne Colombes (FR); Clement, Daniel, 78170 La Celle St. Cloud (FR)
(74) Mandataire: Seytre, Françoise

(57) **Abrégé**

La présente invention se rapporte à un hayon arrière pour véhicule automobile monté pivotant autour d'un axe transversal situé au voisinage d'un pare-chocs solidaire dudit véhicule entre une position extrême de fermeture et une position extrême d'ouverture, caractérisé en ce que le hayon (1) est constitué de deux parties désignées respectivement panneau intérieur (7) et panneau extérieur (8) et d'un dispositif d'articulation de celui-ci permettant l'ouverture du hayon (1) sans qu'il y ait interférence, en position d'ouverture entre le pare-chocs (3) et le panneau extérieur (8) du hayon (1).

## Description

La présente invention concerne un hayon arrière pour véhicule automobile.

Elle se rapporte, plus particulièrement, à un hayon arrière monté pivotant sur la structure de la caisse d'un véhicule automobile autour d'un axe transversal situé au voisinage d'un pare-chocs entre une position extrême de fermeture et une position extrême d'ouverture.

Le dispositif d'articulation d'un tel hayon nécessite un espace entre ce dernier et le pare-chocs suffisamment important afin de permettre à ce dernier de s'ouvrir sans interférer avec le pare-chocs.

L'inconvénient majeur d'un tel type d'articulation réside dans le fait que l'espace mentionné ci-dessus vient nuire au style extérieur du véhicule.

Une solution pour résoudre cet inconvénient consiste à modifier le dessin extérieur du pare-chocs en réalisant dans ce dernier un décrochement permettant l'ouverture du hayon.

Le but de l'invention est de proposer un hayon pour véhicule automobile qui résout ce problème en gardant un style extérieur du véhicule des plus homogène et permettre pour un même véhicule le montage d'un ouvrant du type hayon qui puisse s'ouvrir suivant un axe d'articulation différent que celui de la présente invention en modifiant uniquement sur le véhicule que le hayon.

A cet effet, la présente invention a pour objet un hayon arrière pour véhicule automobile monté pivotant autour d'un axe transversal situé au voisinage d'un pare-chocs solidaire dudit véhicule entre une position extrême de fermeture et une position extrême d'ouverture, caractérisé en ce que le hayon est constitué de deux parties désignées respectivement panneau intérieur et panneau extérieur et d'un dispositif d'articulation de celui-ci permettant l'ouverture du hayon sans qu'il y ait interférence, en position d'ouverture entre le pare-chocs et le panneau extérieur du hayon.

Avantageusement et selon l'invention, le panneau intérieur est articulé dans sa partie basse autour de l'axe transversal et est relié de manière articulée avec le panneau extérieur à son extrémité opposée à l'articulation, par l'intermédiaire d'au moins un axe enserré dans une chape solidaire du panneau extérieur.

Selon une première variante de l'invention,
- le dispositif d'articulation est constitué d'un tirant positionné entre les deux panneaux intérieur et extérieur du hayon dont l'une de ses extrémités est articulée sur la structure au voisinage de l'axe d'articulation et dont l'autre extrémité est articulée sur le panneau extérieur ;
- la rotation du hayon est limitée en position extrême d'ouverture par un câble faisant office de béquille dont l'une des extrémités du câble est fixée sur l'un des côtés de caisse et dont l'autre des extrémités est fixée sur le panneau intérieur du hayon.

Selon une deuxième variante de l'invention :
- le dispositif d'articulation est constitué d'un compas formé par deux bielles respectivement désignées première et deuxième bielle qui sont articulées l'une à l'autre par l'une de leurs extrémités et en ce que l'extrémité libre de la première bielle est montée de façon articulée sur l'un des côtés de caisse tandis que l'extrémité libre de la deuxième bielle est montée coulissant dans une lumière réalisée dans une paroi latérale du panneau extérieur ;
- la deuxième bielle est constituée d'une première et d'une deuxième partie dans laquelle la première partie est définie à partir du point d'articulation dudit compas jusqu'à un point de fixation de la première partie au panneau intérieur du hayon et la deuxième partie est définie par ce dernier point de fixation jusqu'à l'extrémité libre de cette bielle ;
- le point de fixation de la deuxième bielle sur le panneau intérieur est défini de telle sorte que celui-ci est positionné sur le cercle de rotation R1 de centre le point d'articulation du hayon et de rayon égale à la distance séparant le point d'articulation au point de fixation de la première bielle sur le côté de caisse ;
   - la lumière présente la forme générale d'un coude plié à environ 45 degrés permettant une ouverture du panneau extérieur par rapport au panneau intérieur lors de la phase d'ouverture du hayon et un rapprochement de ces deux panneaux lors de la manoeuvre de fermeture du hayon.

Selon une troisième variante de l'invention :
- le dispositif d'articulation est constitué d'un compas formé par deux bielles respectivement désignées première et deuxième bielle qui sont articulées l'une à l'autre par l'une de leurs extrémités et en ce que l'extrémité libre de la première bielle est montée de façon articulée sur le panneau extérieur du hayon tandis que l'extrémité libre de la seconde bielle est montée coulissant dans une glissière disposée sensiblement verticalement et fixée sur l'un des côtés de caisse ;
   - la deuxième bielle est reliée de façon pivotante au panneau intérieur par un point d'articulation.
      Avantageusement et selon l'invention, le dispositif d'articulation est logé dans une cavité réalisée en position de fermeture du hayon entre le panneau intérieur et le panneau extérieur.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue en perspective de la partie arrière d'un véhicule automobile pourvu d'un hayon arrière articulé dans sa partie basse autour d'un axe transversal par rapport au véhicule, représenté en position extrême fermée ;
- la figure 2 est une vue similaire à la figure 1, représenté en position extrême ouverte ;
- la figure 3 est une vue latérale à plus grande échelle du hayon selon la figure 1, en position extrême fermée, équipé d'une première variante d'un dispositif d'articulation selon la présente invention ;
- la figure 4 est une vue similaire à la figure 3, représenté en position intermédiaire entre la fermeture et l'ouverture ; et
- la figure 5 est une vue similaire aux figures 3 et 4 en position extrême ouverte du hayon ;
- la figure 6 est une vue latérale à plus grande échelle du hayon selon la figure 1, en position extrême fermée, équipé d'une deuxième variante d'un dispositif d'articulation selon la présente invention
- la figure 7 est une vue similaire à la figure 6, représenté en position intermédiaire entre la fermeture et l'ouverture ; et
- la figure 8 est une vue similaire aux figures 6 et 7 en position extrême ouverte du hayon ;
- la figure 9 est une vue latérale à plus grande échelle du hayon selon la figure 1, en position extrême fermée, équipé d'une troisième variante d'un dispositif d'articulation selon la présente invention ;
- la figure 10 est une vue similaire à la figure 9, représenté en position intermédiaire entre la fermeture et l'ouverture ; et
- la figure 11 est une vue similaire aux figures 9 et 10 en position extrême ouverte du hayon.

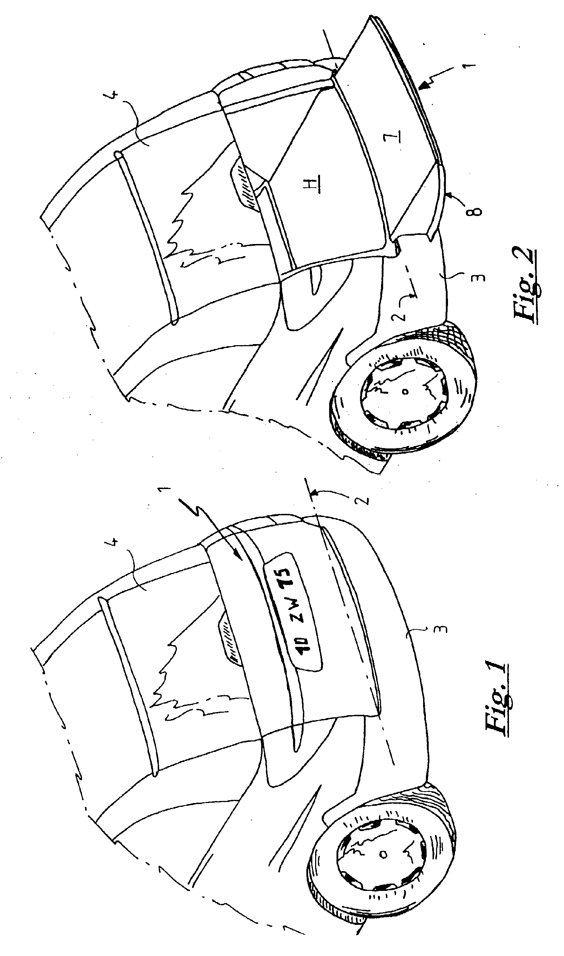

On a représenté sur les figures 1 et 2, la partie arrière d'un véhicule automobile pourvu d'un hayon 1 articulé dans sa partie basse autour d'un axe transversal 2 par rapport au véhicule fixé sur la structure S arrière de ce dernier au voisinage du pare-chocs 3 arrière.

Ce hayon 1 est susceptible de pivoter autour de l'axe transversal 2 entre deux positions extrêmes respectivement une position fermée (Figure 1) et une position ouverte (Figure 2) permettant l'accès à l'habitacle H du véhicule automobile.

Dans l'exemple de réalisation représenté sur les figures 1 à 5, on notera que l'accès au coffre ou habitacle H du véhicule est obstrué d'une part par un hayon 1 désigné également hayon inférieur tel que mentionné ci-dessus et d'autre part par un hayon 4 supérieur constitué par exemple d'une vitre qui est articulé dans sa partie supérieure autour d'un axe transversal solidaire de la structure parallèle à l'axe d'articulation du hayon 1 inférieur permettant ainsi un accès aisé à l'habitacle H.

Selon la présente invention, le hayon inférieur 1 est constitué de deux parties désignées respectivement panneau intérieur 7 et panneau extérieur 8 et d'un dispositif d'articulation de celui-ci afin de permettre l'ouverture du hayon 1 sans qu'il y ait interférence, en position d'ouverture entre le pare-chocs 3 et le panneau extérieur 8 du hayon 1.

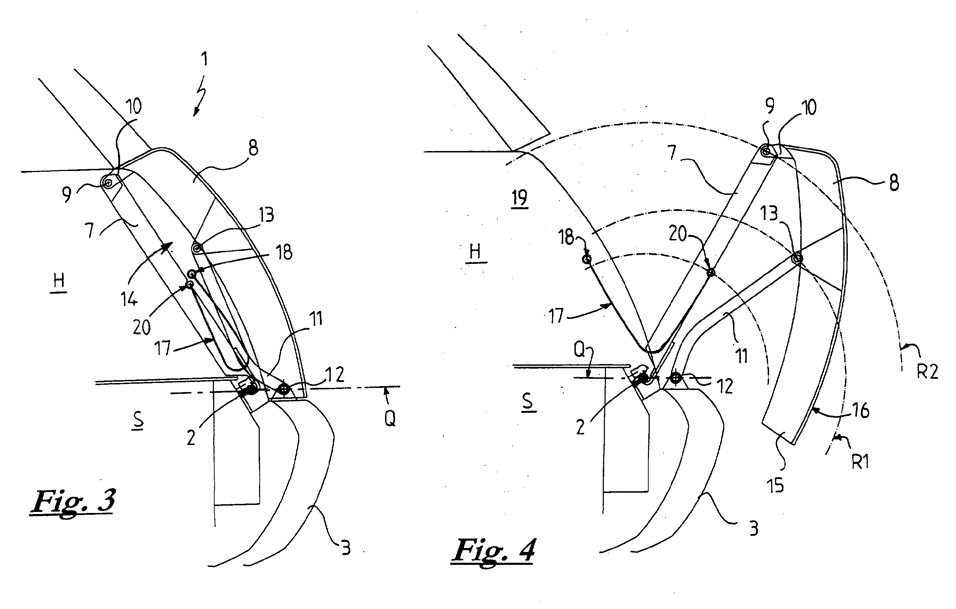

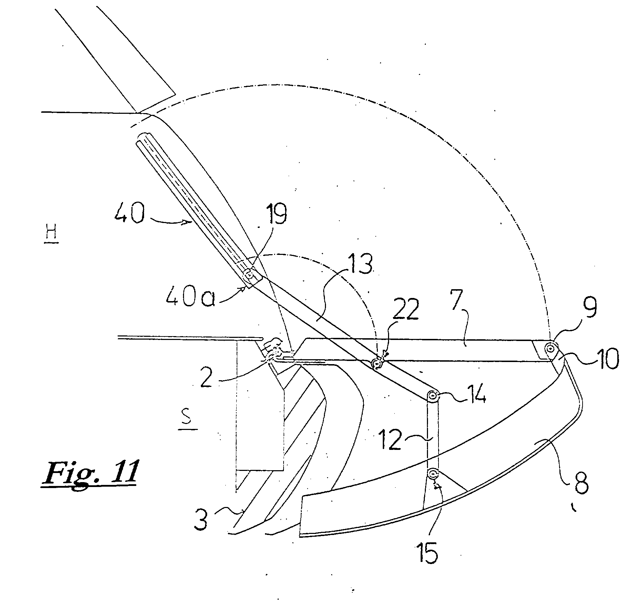

Le panneau intérieur 7 est articulé dans sa partie basse autour de l'axe transversal 2 et est relié de manière articulée avec le panneau extérieur 8 à son extrémité opposée à l'articulation 2, c'est-à-dire dans sa partie supérieure, par l'intermédiaire d'au moins un axe parallèle 9 enserré dans une chape 10 solidaire du panneau extérieur, comme représenté aux figures 3,5,6,8,9 et 11.

Selon la variante des figures 3 à 5,le dispositif d'articulation est constitué d'un tirant 11 positionné entre les deux panneaux intérieur 7 et extérieur 8 du hayon 1 dont l'une 12 de ses extrémités est articulée sur la structure S au voisinage de l'axe d'articulation 2 et dont l'autre extrémité 13 est articulé sur le panneau extérieur 8.

Le tirant 11 est logé avantageusement dans une cavité 14 réalisée en position de fermeture du hayon 1 (Figure 3) entre le panneau intérieur 7 et le panneau extérieur 8. A cet effet, le panneau extérieur 8 est pourvu de deux parois latérales 15 relié entre eux par une paroi extérieure 16 dont l'un des bords des parois latérales 15 présentes une forme concave délimitant ainsi avec la paroi intérieure la cavité 14.

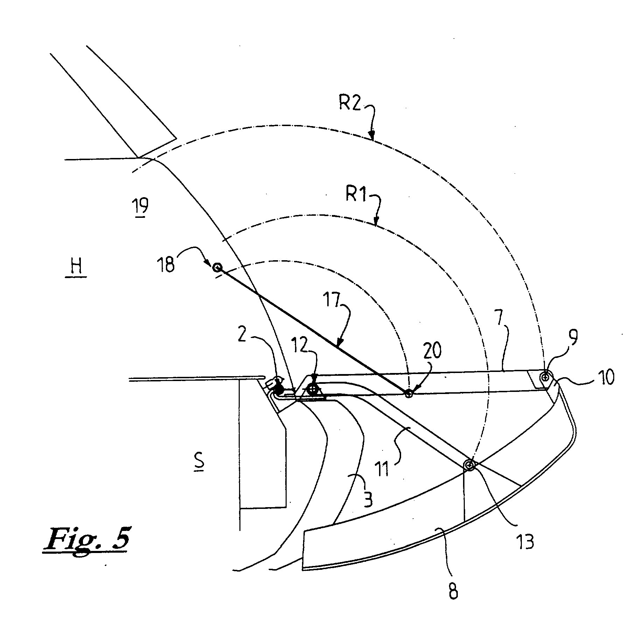

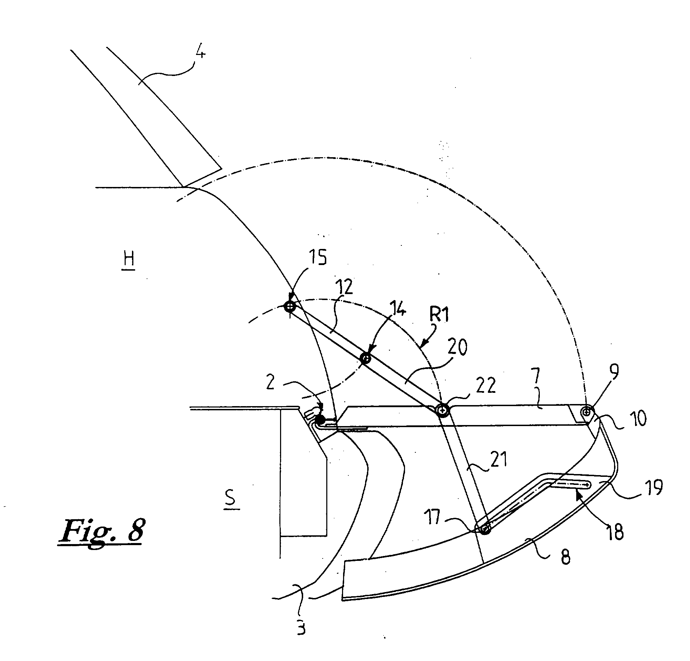

La rotation du hayon est limitée en position extrême d'ouverture -ou horizontale (Figure 5)-par un câble 17 faisant office de béquille dont l'une des extrémités 18 du câble 17 est fixée sur l'un des côtés de caisse 19 et dont l'autre des extrémités 20 est fixée sur le panneau intérieur 7 du hayon. Le point de fixation du câble avec le panneau intérieur est choisi de telle façon qu'en position extrême d'ouverture le câble soit mis sous tension, comme visible à la Figure 5, afin de limiter et maintenir le hayon 1.

On a illustré sur les figures 3 à 5, le mécanisme d'ouverture du hayon arrière selon la présente invention, dans lequel le mouvement de rotation du panneau extérieur 8 du hayon 1 est commandé par le tirant 11 dont le rayon R1 du cercle de rotation de ce dernier est inférieur au rayon R2 du cercle de rotation de l'articulation du panneau intérieur par rapport au panneau extérieur et dont les centres de rotation desdits cercles sont décalés suivant une ligne horizontale Q.

Ainsi, lors de l'ouverture du hayon, le tirant pousse sur le panneau extérieur qui s'écarte du panneau intérieur à une vitesse plus importante que la vitesse d'ouverture du hayon permettant ainsi à celui-ci d'éviter l'interférence avec le pare-chocs en position extrême d'ouverture.

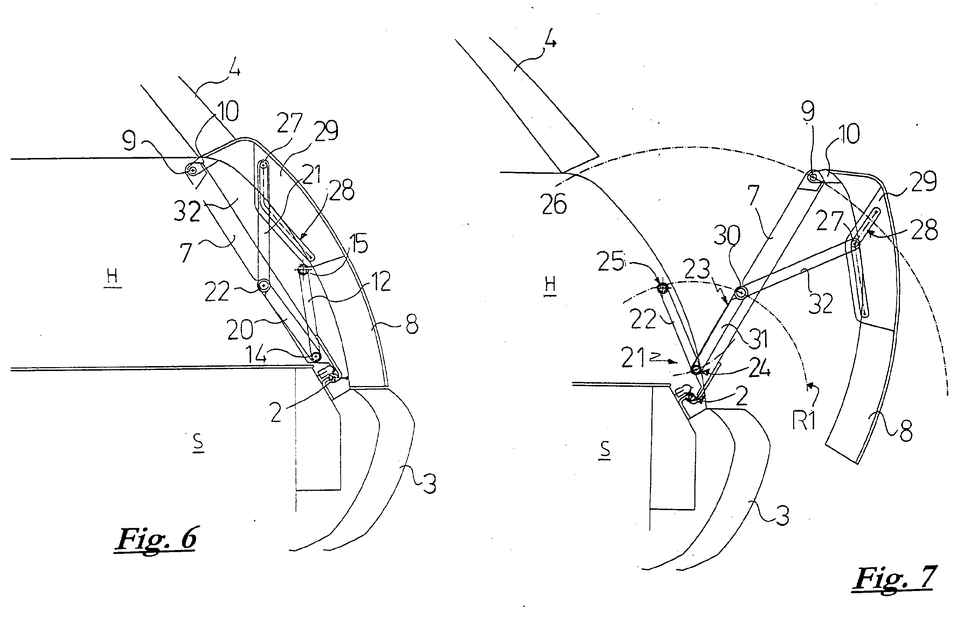

Selon la deuxième variante (figures 6 à 8),le dispositif d'articulation est constitué d'un compas 21 formé par deux bielles respectivement désignées première 22 et deuxième 23 bielle qui sont articulées l'une à l'autre par l'une de leurs extrémités 24.

L'extrémité libre 25 de la première bielle 22 est montée de façon articulée sur l'un des côtés de caisse 26 tandis que l'extrémité libre 27 de la deuxième 23 bielle est montée coulissant dans une lumière 28 réalisée dans une paroi latérale 29 du panneau extérieur 8.

La deuxième 23 bielle est constituée d'une première 231 et d'une deuxième 232 partie dans laquelle la première 231 partie est définie à partir du point d'articulation 24 dudit compas 21 jusqu'à un point de fixation 30 de la première partie au panneau intérieur 7 du hayon et la deuxième 232 partie est définie par ce dernier point 30 de fixation jusqu'à l'extrémité libre 27 de cette bielle 23.

On notera que le point de fixation 30 de la deuxième bielle 23 sur le panneau intérieur 7 est défini de telle sorte que celui-ci est positionné sur le cercle de rotation R1 de centre le point d'articulation 2 du hayon et de rayon égale à la distance séparant le point d'articulation 2 au point de fixation 25 de la première bielle sur le côté de caisse. Ainsi, en position extrême d'ouverture le compas est ouvert faisant office de béquille et à pour fonction de limiter et de maintenir l'ouverture du hayon.

La lumière 28 présente la forme générale d'un coude plié à environ 45 degrés afin de permettre une ouverture importante du panneau extérieur 8 par rapport au panneau intérieur 7 lors de la phase d'ouverture du hayon et un rapprochement de ces deux panneaux 7, 8 lors de la manoeuvre de fermeture du hayon.

Comme visible sur les figures 6 à 8, le dispositif d'articulation est logé avantageusement dans une cavité 32 réalisée en position de fermeture du hayon 1 (Figure 6) entre le panneau intérieur 7 et le panneau extérieur 8.

On a illustré sur les figures 6 à 8, le mécanisme d'ouverture du hayon arrière selon la présente invention, dans lequel le mouvement de rotation du panneau extérieur 8 du hayon 1 est commandé par la deuxième bielle 23 qui lors du mouvement d'ouverture du hayon est entraînée en rotation par la première bielle 22 ce qui permet à l'extrémité libre 27 de la deuxième bielle 23 de coulisser dans la lumière 28 entraînant ainsi une poussée sur le panneau extérieur 8 du hayon évitant par voie de conséquence l'interférence avec le pare-chocs.

Selon la troisième variante de l'invention, le dispositif d'articulation est constitué d'un compas 21 formé par deux bielles respectivement désignées première 22 et deuxième 23 bielle qui sont articulées l'une à l'autre par l'une 24 de leurs extrémités.

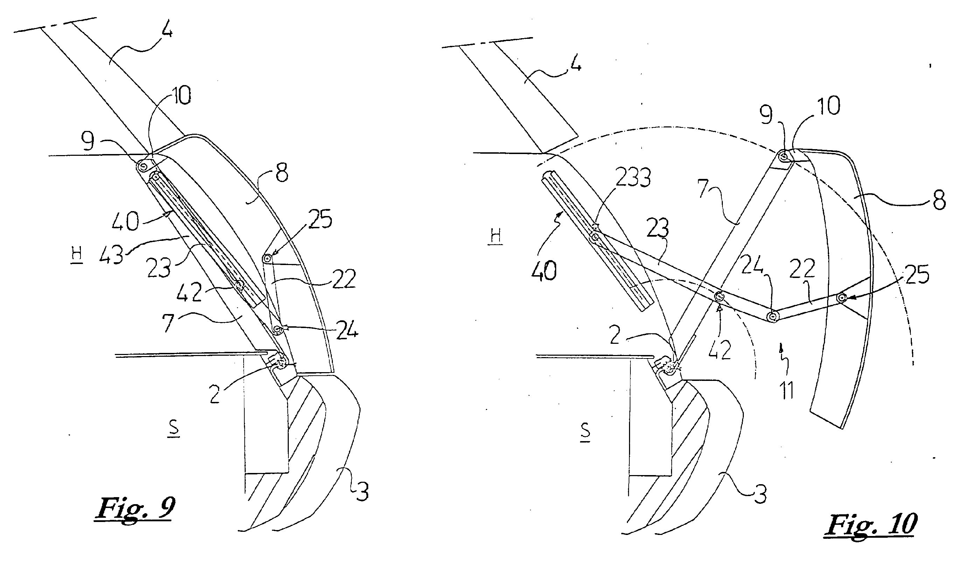

L'extrémité 25 libre de la première 22 bielle est montée de façon articulée sur le panneau 8 extérieur du hayon 1 tandis que l'extrémité libre 233 de la seconde bielle 23 est montée coulissant dans une glissière 40 disposée sensiblement verticalement, comme visible sur les figures 9 à 11, et fixée sur l'un des côtés de caisse 41. La seconde 23 bielle est également reliée de façon pivotante au panneau intérieur 7 par un point d'articulation 42.

Comme visible sur les figures 9 à 11, le dispositif d'articulation est logé avantageusement dans une cavité 43 réalisée en position de fermeture du hayon 1 (Figure 9) entre le panneau intérieur 7 et le panneau extérieur 8.

On a illustré sur les figures 9 à 11, le mécanisme d'ouverture du hayon arrière selon la présente invention, dans lequel lors du mouvement de rotation du hayon 1 le panneau intérieur 7 est entraîné en rotation autour de l'axe d'articulation 2, ce qui permet à l'extrémité libre 233 de la deuxième 23 bielle de coulisser dans la glissière 40, ce qui a pour effet de donner un mouvement de rotation de la deuxième 23 bielle autour de son point d'articulation 42 avec le panneau intérieur 7. Ce mouvement de rotation a pour conséquence de faire pivoter la première 22 bielle autour de l'articulation 24 entre les deux 22, 23 bielles ce qui entraîne une poussée sur le panneau extérieur 8 qui s'articule autour de l'axe 9 défini entre les deux panneaux 7 et 8. Cette poussée sur le panneau extérieur 7 permet avantageusement d'éviter l'interférence du hayon 1 avec le pare-chocs 3.

Dès que le hayon 1 est en position extrême d'ouverture, c'est-à-dire en fin de course d'ouverture, l'extrémité libre de la deuxième bielle 13 vient en butée à l'une 20a des extrémités de la glissière 20 et fait office de béquille permettant au panneau intérieur 7 de se stabiliser en position horizontale pour permettre l'accès à l'habitacle du véhicule et son chargement.

Selon la deuxième et troisième variante de l'invention, dès que le hayon est en position extrême d'ouverture, les deux bielles s'alignent et font offices de béquille pour que le hayon se stabilise en position horizontale et permettre l'accès à l'habitacle du véhicule et son chargement.

On comprend à la lecture de la description ci-dessus que le hayon selon la présente invention est très simple à réaliser et permet avantageusement aucune modification au niveau pare-chocs du véhicule de sorte qu'un même véhicule peut disposer d'un hayon arrière pourvu d'un mécanisme d'ouverture différent.

## Revendications

1. Hayon arrière pour véhicule automobile monté pivotant autour d'un axe transversal situé au voisinage d'un pare-chocs solidaire dudit véhicule entre une position extrême de fermeture et une position extrême d'ouverture, caractérisé en ce que le hayon (1) est constitué de deux parties désignées respectivement panneau intérieur (7) et panneau extérieur (8) et d'un dispositif d'articulation (9) de celui-ci permettant l'ouverture du hayon (1) sans qu'il y ait interférence, en position d'ouverture entre le pare-chocs (3) et le panneau extérieur (8) du hayon (1).

2. Hayon selon la revendication 1, caractérisé en ce que le panneau intérieur (7) est articulé dans sa partie basse autour de l'axe transversal (2) et est relié de manière articulée avec le panneau extérieur (8) à son extrémité opposée à l'articulation (2), par l'intermédiaire d'au moins un axe (9) enserré dans une chape (10) solidaire du panneau extérieur (8).

3. Hayon selon la revendication 1 ou 2, caractérisé en ce que le dispositif d'articulation est constitué d'un tirant (11) positionné entre les deux panneaux intérieur (7) et extérieur (8) du hayon (1) dont l'une (12) de ses extrémités est articulée sur la structure (S) au voisinage de l'axe d'articulation (2) et dont l'autre extrémité (13) est articulée sur le panneau extérieur (8) .

4. Hayon selon la revendication 3, caractérisé en ce que la rotation du hayon est limitée en position extrême d'ouverture par un câble (17) faisant office de béquille dont l'une des extrémités (18) du câble (17) est fixée sur l'un des côtés de caisse (19) et dont l'autre des extrémités (20) est fixée sur le panneau intérieur (7) du hayon.

5. Hayon selon la revendication 1 ou 2, caractérisé en ce que le dispositif d'articulation est constitué d'un compas (21) formé par deux bielles respectivement désignées première (22) et deuxième (23) bielle qui sont articulées l'une à l'autre par l'une de leurs extrémités (24) et en ce que l'extrémité libre (25) de la première (22) bielle est montée de façon articulée sur l'un des côtés de caisse (26) tandis que l'extrémité libre (27) de la deuxième (23) bielle est montée coulissant dans une lumière (28) réalisée dans une paroi latérale (29) du panneau extérieur (8).

6. Hayon selon la revendication 5, caractérisé en ce que la deuxième (23) bielle est constituée d'une première (231) et d'une deuxième (232) partie dans laquelle la première partie (231) est définie à partir du point d'articulation (24) dudit compas (21) jusqu'à un point de fixation (30) de la première partie (231) au panneau intérieur (7) du hayon et la deuxième partie (232) est définie par ce dernier point (30) de fixation jusqu'à l'extrémité libre (31) de cette bielle (23).

7. Hayon selon la revendication 6, caractérisé en ce que le point de fixation (22) de la deuxième bielle (13) sur le panneau intérieur (7) est défini de telle sorte que celui-ci est positionné sur le cercle de rotation (R1) de centre le point d'articulation (2) du hayon et de rayon égale à la distance séparant le point d'articulation (2) au point de fixation (25) de la première bielle (12) sur le côté de caisse (26).

8. Hayon selon l'une des revendications 5 à 7, caractérisé en ce que la lumière (28) présente la forme générale d'un coude plié à environ 45 degrés permettant une ouverture du panneau extérieur (8) par rapport au panneau intérieur (7) lors de la phase d'ouverture du hayon et un rapprochement de ces deux panneaux (7, 8) lors de la manoeuvre de fermeture du hayon (1).

9. Hayon selon la revendication 1 ou 2, caractérisé en ce que le dispositif d'articulation est constitué d'un compas (21) formé par deux bielles respectivement désignées première (22) et deuxième (23) bielle qui sont articulées l'une à l'autre par l'une (24) de leurs extrémités et en ce que l'extrémité libre (25) de la première (22) bielle est montée de façon articulée sur le panneau extérieur (8) du hayon tandis que l'extrémité libre (233) de la seconde (23) bielle est montée coulissant dans une glissière (40) disposée sensiblement verticalement et fixée sur l'un des côtés de caisse (41).

10. Hayon selon la revendication 9, caractérisé en ce que la deuxième (23) bielle est reliée de façon pivotante au panneau intérieur (7) par un point d'articulation (42).

11. Hayon selon l'une quelconque des revendications précédentes, caractérisé en ce que le dispositif d'articulation est logé dans une cavité (14, 32) réalisée en position de fermeture (Figures 3,6,9) du hayon (1) entre le panneau intérieur (7) et le panneau extérieur (8).
